# DEMANDE DE BREVET EUROPEEN

(11) **EP 0 884 469 A1**
(43) Date de publication de la demande: **16.12.1998**
(21) Numéro de dépôt: 98401408.4
(22) Date de dépôt: 11.06.1998
(51) Int. Cl.: F02K 1/52

(54) **Turboréacteur à double flux associé à un inverseur de poussée avec un carénage rapporté dans la veine fluide**

(30) Priorité: 12.06.1997 FR 9707277
(71) Demandeur: Hispano-Suiza Aérostructures, 76700 Gonfreville l'Orcher (FR)
(72) Inventeur: Gonidec, Patrick, 76290 Montivilliers (FR); Rouyer, Pacal Gérard, 76430 Saint Aubin Routot (FR); Vauchel, Guy Bernard, 76610 Le Havre (FR)

(57) **Abrégé**

Dans un turboréacteur à double flux associé à un inverseur de poussée, la structure interne (11) formant le capot primaire du turboréacteur et la structure externe (12) supportant ledit inverseur (10) ne comportent aucune liaison en partie inférieure des structures (11, 12) et ménagent entre elles (11, 12) un canal annulaire (15) de conduit de flux. Un carénage (25) est adjoint dans ledit canal (15) au côté aval d'un bras (3) formant la structure de support de la paroi externe du conduit arrière de soufflante du turboréacteur.

## Description

La présente invention concerne un turboréacteur à double flux associé à un dispositif d'inversion de poussée et comportant un carénage rapporté dans la veine fluide. On rappelle que dans le cas d'un turboréacteur à double flux, le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

L'inverseur de poussée associé qui assure une déviation du flux en procurant une inversion de poussée est d'un type connu en soi, soit à portes ou volets, soit à grilles. Dans le cas d'un inverseur à portes, des exemples de réalisation sont notamment illustréspar FR 1.482.538 ou par FR 2.030.034. Le dispositif d'inversion est constitué de portes constituant en position inactive, en jet direct, une partie du capotage extérieur, et d'une structure fixe réalisant ce capotage extérieur en amont des portes, en aval des portes et entre les portes par l'intermédiaire de poutres qui relient la partie aval du capotage extérieur à la partie amont du capotage extérieur. Les portes sont montées sur une circonférence du capotage extérieur et sont montées pivotantes dans une zone intermédiaire de leurs parois latérales sur les poutres situées de part et d'autre de ces portes, ces parois latérales constituant avec les parois amont et aval, les parois qui relient la partie extérieure des portes, qui constitue une partie de la paroi extérieure de la nacelle à la partie intérieure des portes, qui constitue une partie de la paroi extérieure du conduit.

Par ailleurs, un exemple de réalisation d'inverseur à grilles est illustré par US 4.145.877. Le dispositif d'inversion dans ce cas est composé de volets entraînés par la virole arrière mobile en translation qui viennent boucher le canal annulaire et renvoyer le flux secondaire au travers des grilles circonférentielles, découvertes lors de la manoeuvre de ladite virole arrière, la particularité étant que la bielle d'entraînement du volet n'est pas associée au capot primaire.

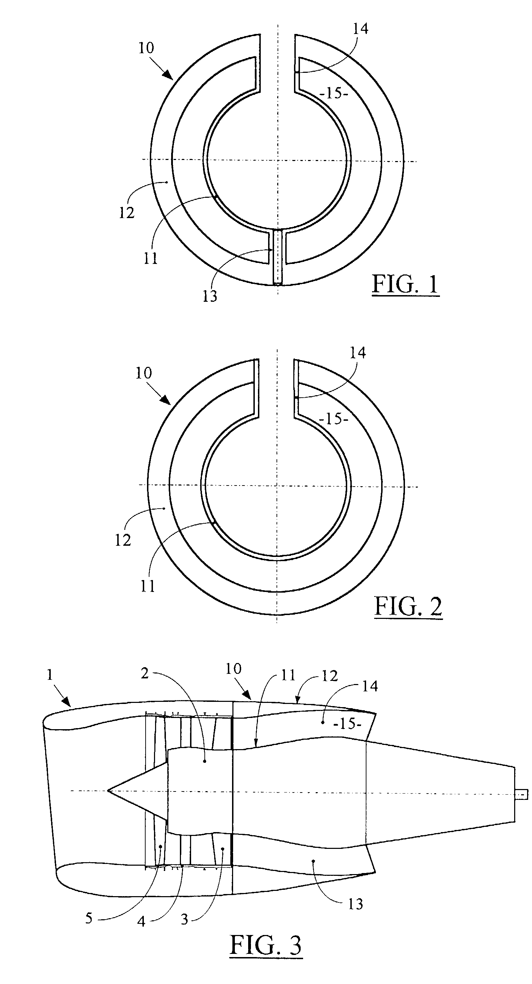

Un exemple connu de réalisation de structure de nacelle d'inverseur s'ouvrant en deux demi-parties 12 a été schématiquement représenté sur la figure 1 suivant une coupe transversale. Celles-ci peuvent être associées à un capot primaire 11 entourant le moteur. Ce type de structure est généralement appelé conduit en C.

Cette technique a pour avantage d'offrir un accès aisé au moteur, après déverrouillage des systèmes de maintien des demi-parties, puis pivotement de celles-ci autour d'un axe longitudinal au voisinage du mât, cet axe ayant une direction voisine à celle de l'axe longitudinal du moteur.

Dans le cas d'un tel type de nacelle, un lien physique est nécessaire en partie inférieure de ladite nacelle entre le capot primaire 11 et la nacelle externe 12. Cette partie 13 appelée aussi îlot a sa surface aérodynamique au contact de la veine 15. Il en est de même pour la partie 14 réalisant la jonction en partie supérieure.

Comme schématiquement représenté sur la figure 3, suivant une coupe longitudinale, selon un exemple général connu, un moteur 2 d'un ensemble propulsif 1 possède des bras 3 de moteur en aval du carter 4 lentourant la soufflante 5. Ceux-ci relient le carter 4 à la structure interne du moteur 2. Ils sont à la frontière de la partie amont de l'inverseur 10, à l'entrée du canal annulaire 15.

La structure d'inverseur 10 telle que déjà définie permet de supporter des pièces à profil aérodynamique, qui font la continuité des bras 3 dans la veine 15. Elles sont installées sur la structure interne 11 et externe 12 de l'inverseur. La partie de jonction 13 et 14 de la structure externe 12 avec le capot 11 entourant le moteur 2 permet aussi de remplir le rôle de continuité aérodynamique de bras 3.

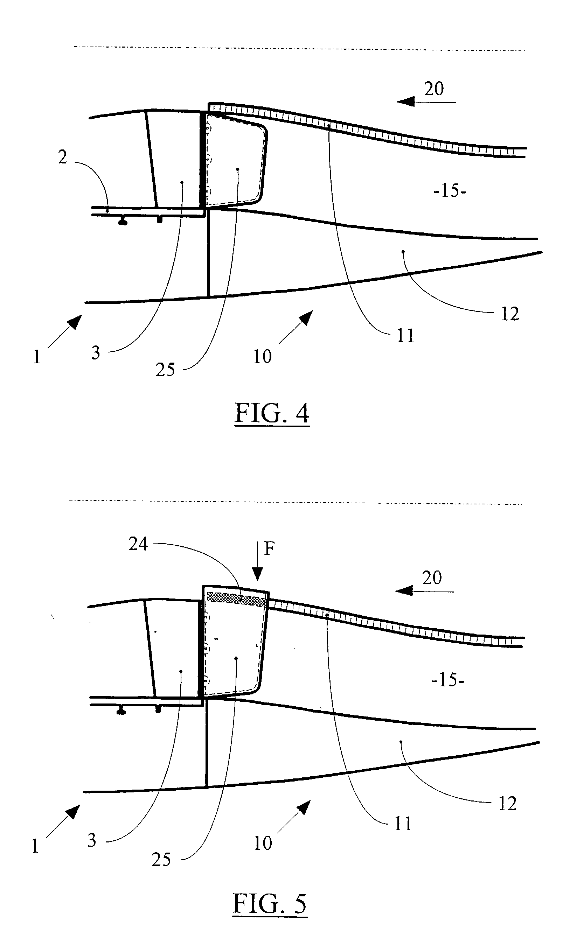

Dans le cas d'une utilisation d'inverseur dont la structure 11 entourant le moteur 2 communément appelé "capot primaire" et la structure externe 12 supportant le système d'inversion sont entièrement indépendantes, comme représenté sur la figure 4, il devient impossible de remplir la fonction de carénage par des éléments aérodynamiques propres à l'inverseur.

Un des buts de l'invention est de répondre à ce besoin d'amélioration des écoulements aérodynamiques sur une nacelle où l'installation des structures interne et externe est entièrement indépendante c'est à dire qu'il n'existe pas de liaison physique entre la structure externe et le capot entourant le moteur dans toutes les zones autres que celle de jonction avec le mât de montage sur l'avion.

Un turboréacteur à double flux associé à un dispositif d'inversion de poussée du type précité et répondant à ces conditions conformément à l'invention est caractérisé en ce qu'un carénage à profil aérodynamique disposé dans le canal annulaire de l'inverseur est adjoint au côté aval d'un bras formant la structure de support de la paroi externe du conduit arrière de soufflante du turboréacteur.

D'autres caractéristiques et avantage de l'invention seront mieux compris à la lecture de la description qui va suivre des modes de réalisation de l'invention, en référence aux dessins annexés sur lesquels :
- la figure 1 représente en vue de face une structure connue d'inverseur constitué de deux demi-parties et qui a fait précédemment l'objet d'une description ;
- la figure 2 représente en vue de face une structure d'inverseur de type connu dont la structure interne est indépendante de la structure externe ;
- la figure 3 représente en coupe longitudinale par un plan passant par l'axe de rotation d'un turboréacteur associé, d'un inverseur de poussée défini dans la figure 1 ;
- les figures 4 à 9 représentent des exemples des modes de réalisation de l'invention ;
- la figure 10 représente une vue de dessus de la figure 5 suivant la flèche F.

La figure 4 montre un exemple de réalisation de l'invention appliquée à un ensemble propulsif 1. La structure de l'inverseur 10 comporte deux ensembles, l'externe 12 et l'interne 11 qui peuvent ou non être associés. Selon la géométrie du moteur, la structure 10 peut être installée dans la direction donnée par la flèche 20.
Le carénage 25 est directement associé au bras 3 du moteur 2. Il est de forme, de dimension et d'encombrement adaptés pour les performances aérodynamiques recherchées par l'homme de l'art.

La structure du carénage peut être réalisée en un seul élément, elle peut être monolithique, creuse, comporter du nid d'abeille, être acoustique ou non. Le matériau utilisé peut être métallique, composite, thermoplastique ou tout autre jugé adapté au besoin.
La jonction avec le bras 3 du moteur est adapté à la technologie propre du motoriste, une des techniques courantes étant un assemblage par vis.

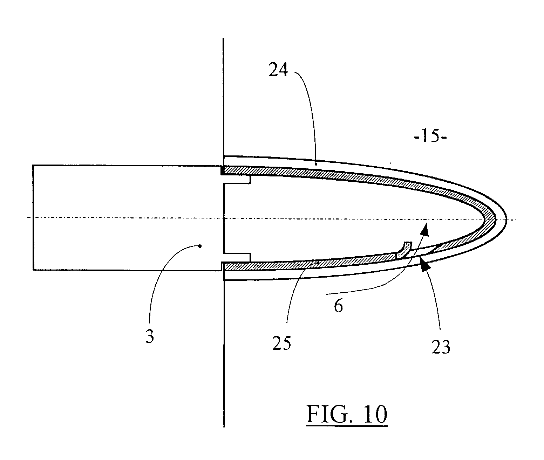

La figure 5 montre un exemple de réalisation de l'invention sur lequel une interface avec la structure interne 11 de l'inverseur est ménagée. Le profil aérodynamique du carénage 25 permet de présenter ladite structure 11 dans le sens de la flèche 20. Une étanchéité 24 est réalisée soit directement sur l'épaisseur même de la structure du capot 11 soit sur pièces rapportées sur l'un ou l'autre des éléments, cette étanchéité étant de définition connue en soi de l'homme de métier.
Un paramètre remarquable peut être associé à cet exemple. Il consiste, comme indiqué sur la figure 10, à utiliser la zone de recompression du flux 6 circulant dans le canal annulaire 15 sur le carénage 25 pour ventiler par exemple le compartiment moteur. Dans cet exemple, et selon le position choisie, l'ouverture peut être réalisée pour des performances optimales de ventilation. L'ouverture 23 est de forme, de position et de disposition adaptées, une forme spécifique de guidage du flux vers l'intérieur du carénage peut être prévu. Le nombre et la ou les dispositions latérales, sur un ou/et les deux côtés, ne sont pas limités.

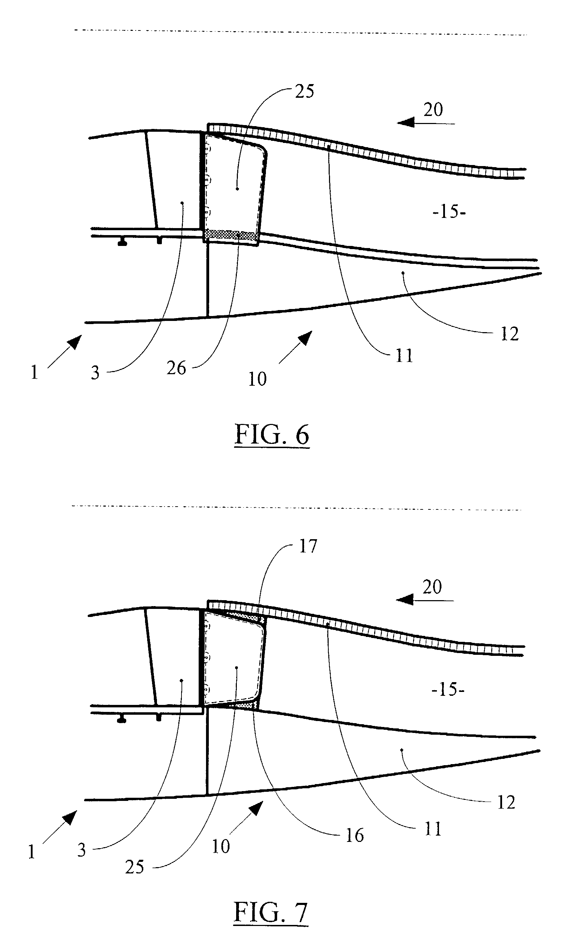

La figure 6 montre le principe énoncé pour la figure 5 transposé sur la structure externe 12 de l'inverseur, l'étanchéité 26 est alors appliquée sur la structure externe 12. Il est bien entendu que le principe de la figure 5 peut être conjugué à celui de la figure 6.

La figure 7 montre un exemple de masquage du jeu entre le carénage 25 avec la structure interne 11 et la structure externe 12 par des tampons 16 et 17 associés respectivement sur lesdites structures 11 et 12. Ces tampons peuvent être de forme générale identique au carénage 25 au contact ou avec jeu sur ledit carénage. Le matériau est adapté pour être de consistance rigide ou souple suivant l'utilisation appliquée.

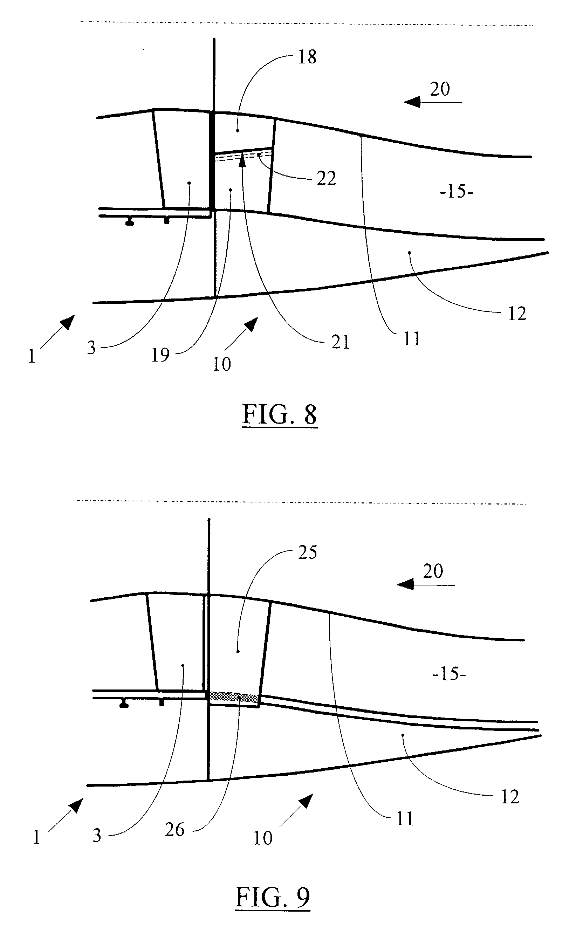

La figure 8 montre un autre mode de l'invention pour lequel chaque demi-partie de carénage 18 et 19 est associée à sa structure respective et non plus liée au bras 3 du moteur. L'interface 21 entre les deux éléments de carénage 18 et 19 est d'orientation spécifique suivant l'ordre d'installation de l'ensemble de la nacelle 10 sur le moteur 2. L'interface 21 peut se situer à n'importe quel niveau entre la partie interne 18 et la partie externe 19 du carénage. Dans l'exemple de la figure 8, c'est la structure interne 11 qui est installée sur le moteur 2 avant la structure externe 12. Un centrage 22 entre les deux demi-carénages 18 et 19 peut y être appliqué.

Une seconde variante à la figure 8 est montrée sur la figure 9. Dans ce concept, le carénage 25 est entièrement intégré à la structure interne 11. Une étanchéité 26 comme déjà spécifié peut être appliquée si le carénage déborde dans la structure externe 12. Il est également possible au carénage de conserver un jeu avec ladite structure externe, jeu qui peut ou non être comblé.
Il est à noter qu'une disposition inverse du carénage 25 sur la structure externe 12 est possible.

L'ensemble de ces paramètres peut être appliqué pour n'importe quel bras 3 du moteur.

De façon remarquable, il est à noter que les concepts proposés sur les figures peuvent faire partie intégrante du bras 3 du moteur 2. Les interfaces et dispositions définies par rapport à la structure de l'inverseur 10 restent identiques.

## Revendications

1. Turboréacteur à double flux associé à un dispositif d'inversion de poussée dans lequel la structure interne (11) formant le capot primaire de moteur et la structure externe (12) supportant ledit dispositif inverseur (10) ne comportent aucune liaison en partie inférieure des structures (11, 12), lesdites structures interne (11) et externe (12) ménageant entre elles un conduit de flux ou canal annulaire (15) caractérisé en ce qu'un carénage (25) à profil aérodynamique, disposé dans ledit canal annulaire (15) de l'inverseur (10) est adjoint au côté aval d'un bras (3) formant la structure de support de la paroi externe du conduit arrière de soufflante du turboréacteur.

2. Turboréacteur à double flux selon la revendication 1 caractérisé en ce que ledit carénage (25) fixé sur le bras (3) de moteur ne présente pas d'interface avec la structure de l'inverseur.

3. Turboréacteur à double flux selon la revendication 1 caractérisé en ce que ledit carénage (25) fixé sur le bras (3) de moteur comporte une interface avec ladite structure interne (11) de l'inverseur, un élément d'étanchéité (24) étant disposé dans la zone d'interface.

4. Turboréacteur à double flux selon l'une des revendications 1 ou 3 caractérisé en ce que ledit carénage (25) fixé sur le bras (3) de moteur comporte une interface avec ladite structure externe (12) de l'inverseur, un élément d'étanchéité (26) étant disposé dans la zone d'interface.

5. Turboréacteur à double flux selon l'une quelconque des revendications 1, 3 et 4 caractérisé en ce qu'au moins une ouverture (23) est ménagée sur ledit carénage (25) de bras de moteur de manière à permettre un prélèvement d'air dans le flux (6) circulant dans le canal annulaire (15) et à travers ledit carénage (25) à l'acheminer vers une zone déterminée du turboréacteur.

6. Turboréacteur à double flux selon l'une des revendications 1 ou 2 caractérisé en ce que les jeux entre la structure externe (12) de l'inverseur et le carénage (25) de bras (3) de moteur d'une part et entre la structure interne (11) de l'inverseur et le carénage (25) de bras (3) de moteur d'autre part sont masqués par des tampons (16, 17).

7. Turboréacteur à double flux selon la revendication 1 caractérisé en ce que ledit carénage (25) est intégré solidairement à la structure interne (11) de l'inverseur (10), un élément d'étanchéité (26) étant disposé dans la zone d'interface entre le carénage (25) et la structure externe (12) de l'inverseur.

8. Turboréacteur à double flux selon la revendication 1 caractérisé en ce que ledit carénage (25) est intégré solidairement à la structure externe (12) de l'inverseur (10), un élément d'étanchéité étant disposé dans la zone d'interface entre le carénage (25) et la structure interne (11) de l'inverseur.

9. Turboréacteur à double flux selon la revendication 1 caractérisé en ce que une demi-partie (18) du carénage (25) est intégrée solidairement à la structure interne (11) de l'inverseur (10) et l'autre demi-partie (19) du carénage (25) est intégrée solidairement à la structure externe (12) de l'inverseur.
